# EUROPÄISCHE PATENTSCHRIFT

(11) **EP 0 893 606 B1**
(45) Veröffentlichungstag und Bekanntmachung des Hinweises auf die Patenterteilung: **02.07.2003**
(21) Anmeldenummer: 98107850.4
(22) Anmeldetag: 29.04.1998
(51) Int. Cl.: F15B 13/01, B60P 1/16

(54) **Hydraulische Steuervorrichtung für ein Kipperfahrzeug**
Hydraulic control device for a tipper lorry
Dispositif de commande hydraulique pour un camion à benne basculante

(30) Priorität: 25.07.1997 DE 29713294 U
(43) Veröffentlichungstag der Anmeldung: 27.01.1999
(73) Patentinhaber: HAWE Hydraulik GmbH & Co. KG, 81673 München (DE)
(72) Erfinder: Heusser, Martin, Dipl.-Ing, 81245 München (DE)
(74) Vertreter: Grünecker, Kinkeldey, Stockmair & Schwanhäusser Anwaltssozietät

(56) Entgegenhaltungen:
- EP-A- 0 468 944
- DE-A- 3 113 516
- DE-A- 4 414 209
- DE-A- 4 446 145
- DE-A- 19 522 746

## Beschreibung

Die Erfindung betrifft eine hydraulische Steuervorrichtung der im Oberbegriff des Anspruchs 1 angegebenen Art, wie sie z.B. aus DE-A-44 46 145 bekannt ist.

Bei der aus DE 44 46 145 A bekannten, hydraulischen Steuervorrichtung für einen Hydraulikzylinder als Teil einer selbstfahrenden Arbeitsmaschine sind als Hebe- und Senkmodule durch Proportionalmagneten direkt betätigte Schieberwegeventile vorgesehen. Der Kolbenschieber des Senkmoduls ist mit einem Ventilkegel versehen, der in der Absperrstellung leckagefrei abdichtet, so dass die Last im Senkmodul und in dem Rückschlagventil gehalten wird. Dem Hebemodul ist eine Druckwaage zugeordnet, die eine Doppelfunktion hat, indem sie einerseits lastabhängig den Zulaufdruck zum Hebemodul einstellt und andererseits bei Bedarf auf drucklosen Umlauf schaltet. Die direkte Verstellung der Kolbenschieber durch die Proportionalmagneten erfordert leistungsfähige und teure Proportionalmagneten. Die Druckwaage muss für den Umlauf der gesamten Fördermenge ausgelegt werden. Die Steuervorrichtung ist insgesamt komplex.

Eine aus DE-A-44 14 209 bekannte Steuervorrichtung eines Kipperantriebs ist baulich aufwendig und hat konstruktionsbedingt den Nachteil, nur schieberdicht, jedoch nicht leckagefrei dicht zu sein. Die angehobene Stellung des Kipperantriebs lässt sich nicht zuverlässig halten.

Weiterer Stand der Technik ist enthalten in DE-A-195 22 746, DE-A-31 13 516 und EP-A-0 468 944.

Der Erfindung liegt die Aufgabe zugrunde, eine hydraulische Steuervorrichtung für ein Kipperfahrzeug zu schaffen, die baulich einfach und kostengünstig ist und den Kipperantrieb bei hydraulischer Blockierung zuverlässig zu halten vermag.

Die gestellte Aufgabe wird erfindungsgemäß mit dem Merkmal des Anspruchs 1 gelöst.

Die hydraulisch vorgesteuerten, magnetbetätigbaren Sitzventile sind baulich einfach, kostengünstig und beanspruchen wenig Bauraum. Die Sitzventilbauweise erbringt leckagefreie Dichtheit in der Schließstellung in beiden Sitzventilen. Der Kipperantrieb wird bei hydraulischer Blockierung auch unter erheblicher Last zuverlässig gehalten. Die hydraulische Vorsteuerung der Sitzventile ermöglicht die Steuerung großer Mengen mit geringem Steuerdruck bzw. geringen Steuerdruckmittelmengen, d.h. eine feinfühlige Steuerung. Die hydraulische Vorsteuerung ermöglicht die Eingliederung der Pumpenumlauf-Umschaltvorrichtung in Form eines einfachen Zweistellungs-Schaltventils, das die Pumpe über das erste Sitzventil auf Umlauf stellt, wenn der Kipperantrieb anhält oder der Kipper abgesenkt wird. Die Umstellung erfolgt mit niedrigem Steuerdruck bzw. geringer Steuerdruckmenge im Vorsteuerkreis des ersten Sitzventils. Das Konzept ist kostengünstig und betriebssicher. Das Zweistellungs-Schaltventil baut klein und ist kostengünstig. Es ist von der Seite der Anzapfleitung leckagefrei dicht, da es den Druck in der Anzapfleitung nur zur Verstellung benötigt.

Ist das erste Sitzventil ein Schwarz/Weiß-Sitzventil, dann erfolgt die Umschaltung auf Pumpenumlauf bzw. ein Zurückschalten auf eine weitere Verstellung des Kipperantriebs relativ schnell ohne unzweckmäßige Bewegung im Kipperantrieb, weil dieser durch das Rückschlagventil von der Druckseite getrennt ist. Ist das erste Sitzventil hingegen ein Proportional-Sitzventil, dann wird beim Umschalten auf Umlauf oder Zurückschalten auf Förderung eine Rampenfunktion erzielt, die Schaltschläge im hydraulischen System verhindert. Das zweite Sitzventil ist als Proportional-Sitzventil mit einer Rampenfunktion in der Lage, Senkbewegungen des Kipperantriebs in Abhängigkeit von der Bestromung seines Magneten einzusteuem. Ist das zweite Sitzventil sogar ein Zweiwege-Stromregler, dann wird die Senkgeschwindigkeit des Kipperantriebs unabhängig vom jeweiligen Lastdruck proportional zur Bestromung gesteuert. Sobald der Kipperantrieb auf Anschlag geht oder die Last zu hoch wird, schaltet das Zweistellungs-Schaltventil selbsttätig auf Umlauf, um Schäden zu vermeiden.

Es wäre auch denkbar, den Druck am Kipperantrieb über einen Druckfühler abzugreifen und statt des Zweistellungs-Schaltventils an der Anzapfleitung ein kleines Magnetventil vorzusehen, das bei Ansprechen die hydraulische Vorsteuerung des ersten Sitzventils entlastet und dieses zum Umschalten des Pumpenstroms zur Rücklaufleitung veranlasst.

Kooperiert das Proportional-Sitzventil mit der Druckwaage, die die Druckdifferenz über das Proportional-Sitzventil unabhängig von Druckschwankungen konstant hält, dann wird die Senkgeschwindigkeit des Kipperantriebs unter Lastdruck unabhängig geregelt, wobei die Menge nur von der Bestromung des Magneten des zweiten Sitzventils abhängt. Zweckmäßig werden die beiden Sitzventile gegensinnig ausgelegt, d.h., dass das erste Sitzventil stromlos offen, hingegen das zweite Sitzventil stromlos geschlossen ist. Zum Heben wird nur das erste Sitzventil angesteuert. Zum Senken hingegen das zweite.

Ein direktes Systemdruck-Begrenzungsventil zwischen der Druckleitung und der Rücklaufleitung kann zweckmäßig sein.

Alternativ lässt sich für die Druckbegrenzungs- und Sicherheitsfunktion ein sehr kleines kostengünstiges Ventil benutzen, das den Systemdruck indirekt in der hydraulischen Vorsteuerung des ersten Sitzventils überwacht und nur sehr geringe Steuerdruckmittelmengen bzw. einen relativ niedrigen Steuerdruck zu beherrschen braucht Sobald in der hydraulischen Vorsteuerung des ersten Sitzventils repräsentativ für den Systemdruck eine bestimmte Druckgrenze erreicht ist, spricht das Druckbegrenzungsventil an.

Die Steuervorrichtung kann wechselweise auch für die Betätigung des Kipperantriebs eines Anhängers des Kipperfahrzeugs benutzt werden. Dabei kann für den Kipperantrieb des Anhängers dasselbe Zweistellungs-Schaltventil verwendet werden und dadurch denselben Lastdruck überwachen wie beim Kipperfahrzeug selbst. Dann sollte ein Wechselventil vorgesehen sein, um den jeweiligen Lastdruck zum Betätigen des Zweistellungs-Schaltventils abgreifen zu können. Zweckmäßig ist aber für den Anhänger ein eigenes Zweistellungs-Schaltventil vorgesehen, was die Möglichkeit bietet, unterschiedliche Ansprechdrücke einzustellen.

Anhand der Zeichnung werden Ausführungsformen des Erfindungsgegenstandes erläutert. Es zeigen:
- Fig. 1: als Blockschaltbild eine hydraulische Steuervorrichtung, wobei zusätzlich eine Detailvariante bezüglich der Druckbegrenzung im System dargestellt ist,
- Fig. 2: als Blockschaltbild eine weitere Ausführungsform,
- Fig. 3: einen Längsschnitt einer Ausführungsform eines Proportional-Sitzventils mit hydraulischer Vorsteuerung und Magnetbetätigung.
- Fig. 4: einen Längsschnitt durch einen Proportional-Sitzventil-Zweiwege-Stromregler, und
- Fig. 5: einen Längsschnitt durch ein Schwarz/Weiß- bzw. Proportional-Sitzventil mit hydraulischer Vorsteuerung und Magnetbetätigung.

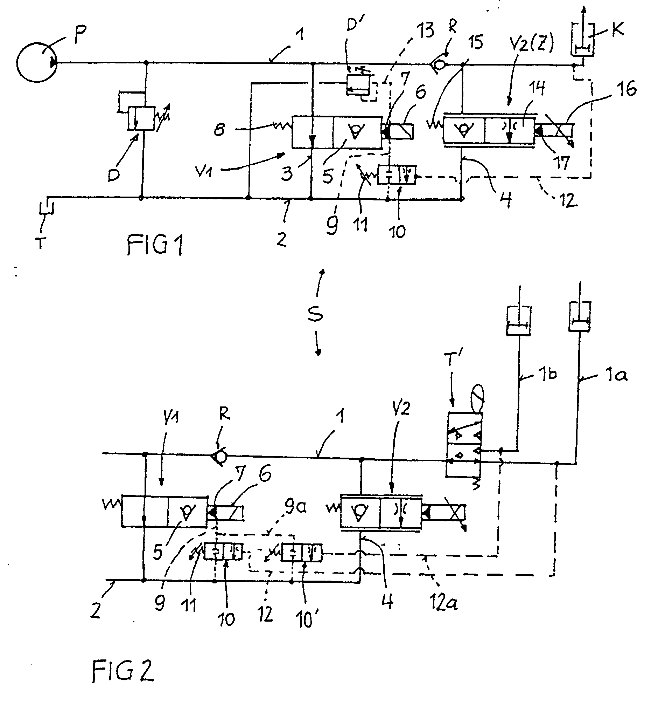

Eine hydraulische Steuervorrichtung S dient in Fig. 1 zum Steuern eines Kipperantriebs K in einem Kipperfahrzeug, beispielsweise einem Kipper-Lastkraftwagen. Eine Pumpe P, zweckmäßigerweise ein Konstantförderpumpe, speist eine Druckleitung 1, die über ein in Rückströmrichtung zur Pumpe P sperrendes Rückschlagventil R an einen Kipperantrieb K (einen Kipperzylinder) angeschlossen ist. Parallel zur Druckleitung 1 verläuft eine Rücklaufleitung 2. Ein von der Druckleitung 1 vorgesteuertes Systemdruck-Begrenzungsventil D mit einstellbarer Ansprechgrenze ist zwischen der Druckleitung 1 und der Rücklaufleitung 2 stromauf des Rückschlagventils R vorgesehen. In einer die Druckleitung 1 mit der Rücklaufleitung 2 stromauf des Rückschlagventils R verbindenden Umlaufleitung 3 ist ein erstes Sitzventil V1 angeordnet, das eine hydraulische Vorsteuerung 7 für ein Sitz-Schließelement 5 sowie einen Betätigungsmagneten 6 (entweder einen Schwarz/Weiß-Schaltmagneten oder einen Proportionalmagneten) aufweist, der gegen die Kraft einer Feder 8 wirkt. Die hydraulische Vorsteuerung 7 ist über eine Steuerleitung 9 mit der Rücklaufleitung 2 verbunden. In der Steuerleitung 9 ist ein Pumpen-Umlauf-Umschaltventil 10 enthalten, beispielsweise ein Zweistellungs-Schaltventil, das durch eine einstellbare Feder 11 in Richtung auf seine Absperrstellung und in Richtung auf seine Durchgangsstellung mit einem vom Lastdruck stromab des Rückschlagventils R in der Druckleitung 1 abgegriffenen Vorsteuerdruck in einer Anzapfleitung 12 beaufschlagbar ist. Das erste Sitzventil V1 ist bei der gezeigten Ausführungsform stromlos offen; in seiner Schließstellung (nicht gezeigt) jedoch leckagefrei dicht. Das Umschaltventil 10 ist an der Betätigungsseite (Anschluß der Anzapfleitung 12) leckagefrei dicht. Die Anzapfleitung 12 ist stromab des Rückschlagventils R an die Druckleitung 1 (oder an den Kipperantrieb K) angeschlossen.

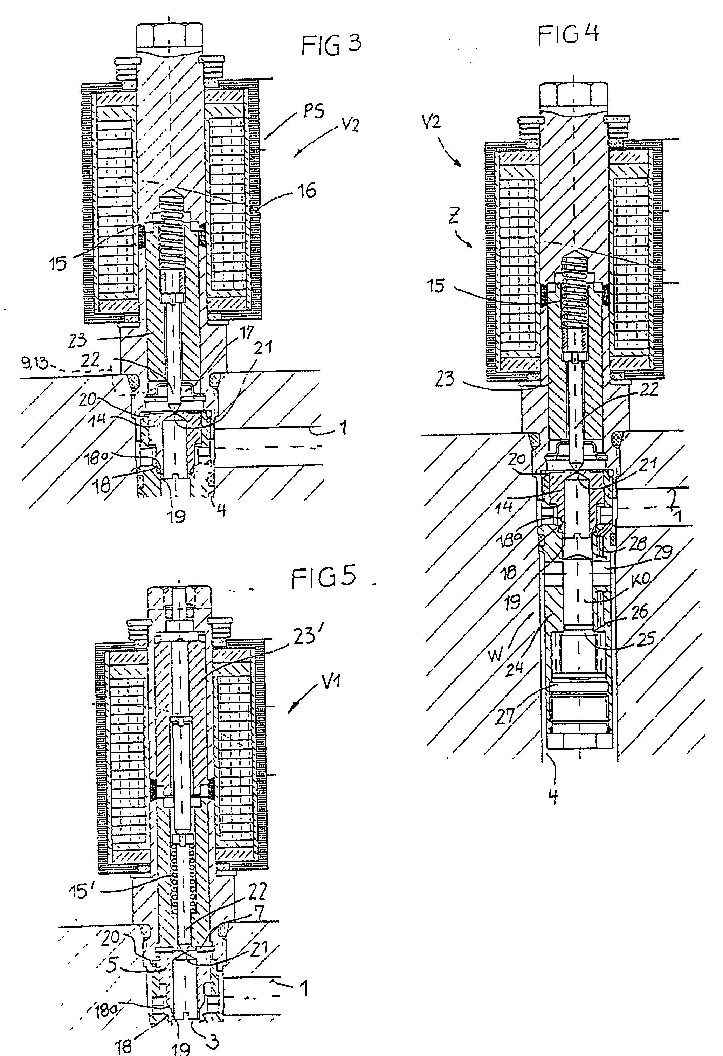

Stromab des Rückschlagventils R verbindet eine Leitung 4 die Druckleitung 1 mit der Rücklaufleitung 2. In der Leitung 4 ist ein zweites Sitzventil V2 angeordnet, und zwar ein Proportional-Sitzventil mit hydraulischer Vorsteuerung 17 und entweder einem Proportionalmagneten 16 oder einem in seiner Kennlinie einem Proportionalmagneten ähnlichen Schaltmagneten. Die hydraulische Vorsteuerung 17 und der Magnet 16 wirken entgegengesetzt zur Kraft einer Feder 15 am Sitz-Schließelement 14 des zweiten Proportional-Sitzventils V2, um z.B. eine Rampenfunktion zu steuern bzw. zu regeln. Femer ist angedeutet, daß das Proportional-Sitzventil V2 als Zweiwege-Stromregler Z ausgelegt sein kann (später erläutert anhand von Fig. 4), um die über die Leitung 4 abzulassende Menge lastdruckunabhängig zu regeln. Das zweite Proportional-Sitzventil V2 ist so ausgelegt, daß es stromlos geschlossen und dann leckagefrei dicht ist.

Als Alternative zum Systemdruck-Begrenzungsventil D (das dann weggelassen werden kann) ist ein kleines Sicherheits- oder Druckbegrenzungsventil D' in einer Hilfssteuerleitung 13 von der hydraulischen Vorsteuerung 7 des ersten Sitzventils V1 zum Rücklauf 2 vorgesehen, das aus der hydraulischen Vorsteuerung 7 vorgesteuert und auf einen bestimmten Ansprechdruck einstellbar ist. Ist das Druckbegrenzungsventil D vorgesehen, wird das Sicherheits- oder Druckbegrenzungsventil D' nicht benötigt.

### Funktion:

Die Pumpe P wird zur Kipperbetätigung eingeschaltet oder läuft permanent. Beide Magneten 6, 16 sind stromlos. Deshalb fördert die Pumpe P im Umlauf in die Rücklaufleitung 2. Soll der Kipperantrieb K betätigt werden, dann wird der Magnet 6 bestromt. Über die hydraulische Vorsteuerung 7 wird das Sitz-Schließelement 5 in die Schließstellung gebracht. Dies kann entweder in einer Schwarz/Weiß-Funktion oder in einer Rampenfunktion erfolgen, abhängig davon, ob das erste Sitzventil V1 ein Schwarz/Weiß-Sitzventil oder ein Proportional-Sitzventil ist. Das geförderte Druckmittel öffnet das Rückschlagventil R und strömt zum Kipperantrieb K, wobei das zweite Sitzventil V2 nach wie vor stromlos geschlossen ist. Das Druckbegrenzungsventil D überwacht den Systemdruck direkt. Ist hingegen das Sicherheitsoder Druckbegrenzungsventil D' im Vorsteuerkreis des ersten Sitzventils V vorgesehen, dann überwacht dieses den Systemdruck indirekt über die hydraulische Vorsteuerung 7 des ersten Sitzventils V1. Hat der Kipperantrieb K eine gewünschte Position erreicht, dann wird die Bestromung des Magneten 6 beendet und wird die Druckleitung 1 mit der Rücklaufleitung 2 über die Leitung 3 verbunden. Der Kipperantrieb K hält die erreichte Position, da er über das Rückschlagventil R und das zweite Sitzventil V2 leckagefrei dicht hydraulisch blockiert ist. Auch am Umschaltventil 10 tritt in der Anzapfleitung 12 keine Leckage auf. Wird der Kipperantrieb K bis auf Anschlag verstellt bzw. steigt der Lastdruck an eine vorbestimmte Sicherheitsgrenze, dann spricht über die Anzapfleitung 12 das Umschaltventil 10 selbsttätig an. Es verbindet die hydraulische Vorsteuerung 7 des ersten Sitzventils V1 direkt mit der Rücklaufleitung 2. Das erste Sitzventil V1 nimmt automatisch seine Durchgangsstellung gemäß Fig. 1 ein.

Ist eine Senkbewegung des Kipperantriebs K einzusteuem, dann wird bei sperrendem Rückschlagventil R der Magnet 16 des zweiten Sitzventils V2 bestromt. In Abhängigkeit von der Bestromung wird das Druckmittel mit einer Rampenfunktion oder sogar lastdruckunabhängig (abhängig davon, ob das zweite Sitzventil V2 ein Proportional-Sitzventil oder sogar ein Zwelwege-Stromregler-Proportlonal-Sitzventil ist) in die Rücklaufleitung 2 abgelassen. Bei der Steuerung der Senkbewegung kann die Pumpe P abgeschaltet oder im Umlauf betrieben sein.

In Fig. 2 ist die hydraulische Steuervorrichtung S in der Lage, wahlweise den Kipperantrieb K des Kipperfahrzeuges oder den Kipperantrieb K' eines Anhängers zu betätigen. Zu diesem Zweck ist die Druckleitung 1 über eine hydraulische Weiche T' in Leitungszweige 1a und 1b zu den beiden Kipperantrieben K, K' aufgezweigt. Ist nach wie vor nur ein einziges Umschaltventil 10 (nicht gezeigt) vorgesehen, dann ist die Vorsteuer-Anzapfleitung 12, z.B. über ein Wechselventil, an beide Leitungszweige 1a und 1b angeschlossen, um nur den jeweiligen Lastdruck abzugreifen. Zweckmäßiger ist es hingegen (Fig. 2), zwei Umschaltventile 10 und 10' vorzusehen, deren jedes über eine eigene Anzapfleitung 12, 12a an einen Leitungszweig 1a und 1b angeschlossen ist. Beide Umschaltventile 10, 10' sind zueinander parallel in der Steuerleitung 9 und einem Parallelzweig 9a, jeweils zur Rücklaufleitung 2, angeordnet. Ihre Federn 11, 11a lassen sich auf unterschiedliche Ansprechdrücke einstellen, entsprechend den Sicherheitsanforderungen beim Kipperfahrzeug und beim Anhänger, die voneinander verschieden sein können. Die weitere Funktion beim Heben und Senken entspricht der anhand von Fig. 1 beschriebenen.

In den Fig. 3 bis 5 sind mögliche konstruktive Ausführungen der ersten und zweiten Sitzventile gezeigt, die anhand der Fig. 1 und 2 mit ihren Funktionen erläutert wurden.

In Fig. 3 ist das zweite Proportional-Sitzventil (PS) gezeigt, das in den Fig. 1 und 2 stromlos geschlossen ist. Der Magent 16 (ein Proportionalmagnet oder ein durch Abstimmung seiner Kennlinie einem Proportionalmagneten ähnlicher Schaltmagnet) beaufschlagt über seinen Magnetanker 23 ein Schließelement 22 eines aus dem Schließelement 22 und einem Ventilsitz 20 (Sitzventil) gebildeten Vorsteuerventils der hydraulischen Vorsteuerung 17 (eine Steuerkammer, die über eine Drossel 20 an die Druckleitung 1 angeschlossen ist). Das Sitzschließelement 14 besitzt eine kegelige oder ballige Dichtfläche 18a, die mit einem Ventilsitz 18 zwischen der Druckleitung 1 und der Verbindungsleitung 4 zur Rücklaufleitung 2 zusammenarbeitet (Sitzventil). Das untere Ende des Sitz-Schließelementes 14 weist einen in den Ventilsitz 18 eintauchenden Ringflansch 19 auf, der mit einer sich an den Ventilsitz 18 anschließenden Bohrung blendenartig zusammenwirkt, um eine vom Hub des Sitz-Schließelementes abhängige Mengen-Einstellvorrichtung zu bilden. Der Ventilsitz 21 des Vorsteuerventils sollte z.B. nicht größer als eine 0,6 mm-Bohrung sein, und auch die Drossel 20 sollte höchstens so groß sein wie der Ventilsitz 21, so daß mit dem Sitz-Schließelement 14 eine Rampenfunktion gesteuert werden kann. Die Steuerleitung 9 bzw. 13 (gestrichelt angedeutet) ist an die hydraulische Vorsteuerung 17 angeschlossen. Die Beaufschlagungsfläche des Sitz-Schließelementes 14 ist in der Steuerkammer bzw. der hydraulischen Vorsteuerung 17 größer als die Querschnittsfläche des Ventilsitzes 18, so daß ein relativ geringer Steuerdruck aus dem Lastdruck ausreicht, das zweite Sitzventil V2 geschlossen zu halten. Zu diesem Zweck wird das Schließelement 22 durch eine harte Feder 15 mit steiler Kennlinie beaufschlagt, die zwischen dem Schließelement 22 und einem stationären Teil des Magneten 16 angeordnet ist.

In Abhängigkeit von der steilen Kennlinie der Feder 15 gibt es für unterschiedliche Stromstärken des Magneten 16 mehrere Schnittpunkte zwischen der Federkennlinie und der jeweiligen Magnetkennlinie, die bestimmten Öffnungsweiten des Vorsteuerventils und demzufolge Öffnungsweiten des Sitz-Schließelementes 14 entsprechen, um unterschiedliche Mengen durchzulassen.

In Fig. 4 ist das zweite Sitzventil V2 als Proportional-Sitzventil-Zweiwege-Stromregler Z ausgebildet, um die Geschwindigkeit des Kipperantriebs lastdruckunabhängig nur nach der Stromstärke der Bestromung des Magneten 16 zu regeln. Im Unterschied zur Ausbildung gemäß Fig. 3 ist dem Ventilsitz 18 in Abströmrichtung eine Druckwaage W mit einem Kolben K nachgeordnet, der blendenartig mit Abströmöffnungen 29 zur Verbindungsleitung 4 bzw. zur Rücklaufleitung 2 zusammenarbeitet, um die Druckdifferenz über das Proportional-Sitzventil konstant zu halten. Der Aufbau stimmt im oberen Teil des Ventils mit dem anhand von Fig. 3 geschilderten überein. Der Kolben K ist in einer den Ventilsitz 18 nach unten verlängerten Hülse 24 schieberartig zwischen der in Fig. 4 gezeigten Absperrstellung und Regelstellungen relativ zu den Abströmöffnungen 29 verschiebbar. Der Kolben K besitzt eine kegelige bzw. ballige Dichtfläche, die mit einem Ventilsitz 26 in der Hülse 24 in der Absperrstellung gemäß Fig. 4 zusammenarbeitet (Sitzventil), um eine Kammer 27 leckagefrei dicht abzusperren, die über einen Kanal 28 mit der Druckleitung 1 verbunden ist und den jeweiligen Lastdruck hält.

Fig. 5 verdeutlicht eine Ausführung des ersten Sitzventils V1 als Proportional-Sitzventil ähnlich dem in Fig. 3 gezeigten. Unterschiedlich ist, daß das Proportional-Sitzventil V1 in Fig. 5 stromlos offen ist, weil die harte Feder 15' mit steiler Kennlinie das Schließelement 22 des Vorsteuerventils in Öffnungsrichtung beaufschlagt, während der Magnetanker 23' bei Bestromung des Magneten 6 das Schließelement 22 in Schließrichtung beaufschlagt. Der Ventilsitz 18 ist zwischen der Druckleitung 1 und der Verbindungsleitung 3 bzw. Rücklaufleitung 2 vorgesehen und arbeitet mit der Dichtfläche 18a des Sitz-Schließelementes 5 in Abhängigkeit davon zusammen, welcher Druck in der hydraulischen Vorsteuerung 7 eingesteuert ist. Um eine Rampenfunktion steuern zu können, weist das Sitz-Schließelement 5 anschließend an die Dichtfläche 18a einen Ringflansch 19, gegebenenfalls mit Steuerkerben, auf, der mit einem sich an den Ventilsitz 18 anschließenden Bohrungsabschnitt in Abhängigkeit vom Öffnungsgrad blendenartig zusammenarbeitet. Wird der Magnet 6 bestromt, dann schließt das Schließelement 22 den Ventilsitz 21. In der hydraulischen Vorsteuerung 7 baut sich über die Drossel 20 aus dem Druck in der Druckleitung 1 ein Steuerdruck auf, der das Sitz-Schließelement 5 mit einer Rampenfunktion auf den Ventilsitz 18 preßt und den Durchgang unterbricht. Solange das Vorsteuerventil geschlossen gehalten ist, wird das Sitz-Schließelement 5 durch den Steuerdruck in seiner Schließstellung gehalten, und zwar leckagefrei dicht.

Wird im ersten Sitzventil V1 ein Sitz-Schließelement 5 ohne Ringflansch 19 eingesetzt, und eine weiche Feder 15', bzw. auch eine größere Drossel 20, dann arbeitet das gezeigte erste Sitzventil V1 als Schwarz/Weiß-Sitzventil ohne spürbare Rampenfunktion.

Aus dem Vergleich der Fig. 3, 4 und 5 ist ersichtlich, daß für die in der hydraulischen Steuervorrichtung gemäß den Fig.1 und 2 verwendeten Sitzventile V1 und V2 im wesentlichen dieselben Komponenten verwendbar sind, und daß die jeweiligen Montagevoraussetzungen dieselben sein können. Dies trägt dazu bei, die hydraulische Steuervorrichtung baulich einfach und kostengünstig herstellen zu können.

## Patentansprüche

1. Hydraulische Steuervorrichtung (S), insbesondere zum Verstellen wenigstens eines Kipperantriebs (K, K1) in einem Kipperfahrzeug, mit einem ersten magnetbetätigten Hebe-Wegeventll und einem zweiten magnetbetätigten Senk-Wegeventil, die einer an eine Pumpe (P) angeschlossene Druckleitung (1) zum Kipperantrieb (K, K1) und einer Rücklaufleitung (2) zugeordnet sind, mit einem zur Pumpe (P) sperrenden Rückschlagventil (R) in der Druckleitung (1), und mit einer selbsttätig druckabhängig ansprechenden Pumpen-Umlauf-Umschaltvorrichtung, wobei der Kipperantrieb (K, K1) wahlweise entweder leckagefrei dicht absperrbar oder mit der Pumpe (P) bzw. der Rücklaufleitung (1) verbindbar ist, **dadurch gekennzeichnet, dass** das erste und das zweite Wegesteuerventil je ein zwischen der Druckleitung (1) und der Rücklaufleitung (2) angeordnetes, hydraulisch vorgesteuertes Sitzventil (V1, V2) ist, das die hydraulische Vorsteuerung (7) des ersten Sitzventils (V1) über eine Steuerleitung (9, 9a) mit der Rücklaufleitung (2) verbunden ist, und dass in der Steuerleitung (9, 9a) ein über eine Vorsteuer-Anzapfleitung (12, 12a) zum stromab des Rückschlagventils (R) liegenden Teil der Druckleitung (1) gegen Federkraft (11, 11a) aus einer Absperr- in eine Durchgangsstellung umschaltbares Zweistellungs-Schaltventil (10, 10') angeordnet ist.

2. Hydraulische Steuervorrichtung nach Anspruch 1, **dadurch gekennzeichnet, dass** das erste hydraulisch vorgesteuerte magnetbetätigbare Sitzventil (V1) zwischen der Druckleitung (1) und der Rücklaufleitung (2) stromauf des Rückschlagventils (R) angeordnet und als Schwarz/Weiß- oder Proportional-Sitzventil (V1) ausgebildet ist, und dass das zweite hydraulisch vorgesteuerte magnetbetätigbare Sitzventil (V2) zwischen der Druckleitung (1) und der Rücklaufleitung (2) stromab des Rückschlagventils (R) angeordnet und als Proportional-Sitzventil oder als Proportional-Sitzventil-Zweiwege-Stromregler (Z) ausgebildet ist.

3. Hydraulische Steuervorrichtung nach Anspruch 1, **dadurch gekennzeichnet, dass** das Zweistellungs-Schaltventil (10, 10') an seiner Vorsteuerseite in Abströmrichtung vom Kipperantrieb (K, K1) leckagefrei dicht ausgebildet ist.

4. Hydraulische Steuervorrichtung nach Anspruch 1, **dadurch gekennzeichnet, dass** der Ansprechdruck des Zweistellungs-Schaltventils (10, 10') einstellbar ist.

5. Hydraulische Steuervorrichtung nach Anspruch 2, **dadurch gekennzeichnet, dass** das zweite, als Proportional-Sitzventil-Zweiwege-Stromregler (Z) ausgebildete Sitzventil (V2) eine in eine Abgrenzstellung bringbare Druckwaage (W) mit Sitzventilfunktion in der Absperrstellung aufweist.

6. Hydraulische Steuervorrichtung nach wenigstens einem der vorhergehenden Ansprüche, **dadurch gekennzeichnet, dass** zwischen der Druckleitung (1) und der Rücklaufleitung (2) ein direktes Systemdruck-Begrenzungsventil (D) vorgesehen ist.

7. Hydraulische Steuervorrichtung nach wenigstens einem der Ansprüche 1 bis 5, **dadurch gekennzeichnet, dass** zwischen dem Zweistellungs-Schaltventil (10, 10') und der hydraulischen Vorsteuerung (7) des ersten Sitzventils (V1) und der Rücklaufleitung (2) ein Steuerleitungszweig (13) vorgesehen ist, in welchem ein von der Seite der hydraulischen Vorsteuerung (7) hydraulisch vorgesteuertes Druckbegrenzungsventil (D') vorgesehen ist, das den Druck in der Druckleitung (1) indirekt über die Vorsteuerung des ersten Sitzventils (V1) überwacht.

8. Hydraulische Steuervorrichtung nach wenigstens einem der Ansprüche 1 bis 7, **dadurch gekennzeichnet, dass** die Druckleitung (1) über eine hydraulische Weiche (T) geteilt ist in einen Leitungszweig (1a) für den Kipperantrieb (K) eines Kipperfahrzeugs und wenigstens einen Leitungszweig (1b) für einen Kipperantrieb (K1) eines Kipperanhängers, und dass in der Steuerleitung (9, 9a) zueinander parallel für jeden Leitungszweig (1a, 1b) ein Zweistellungs-Schaltventil (10, 10') vorgesehen und über eine eigene Vorsteuer-Anzapfleitung (12, 12') an den zugehörigen Leitungszweig (1a, 1b) angeschlossen ist.

## Claims

1. Hydraulic control device (S), in particular for the adjustment of at least one tipper drive (K, K1) in a tipper vehicle, with a first magnetically actuated raising directional valve and a second magnetically actuated lowering directional valve which are assigned to a delivery line (1) to the tipper drive (K, K1), the said delivery line being connected to a pump (P), and to a return line (2), with a non-return valve (R), blocking towards the pump (P), in the delivery line (1), and with a pump circulation change-over device responding automatically as a function of pressure, the tipper drive (K, K1) being selectively either capable of being sealingly shut off, free of leakage, or of being connected to the pump (P) or to the return line (1), **characterized in that** the first and the second directional control valve is in each case a hydraulically pilot-controlled seat valve (V1, V2) which is arranged between the delivery line (1) and the return line (2), **in that** the hydraulic pilot control (7) of the first seat valve (V1) is connected to the return line (2) via a control line (9, 9a), and **in that** the control line (9, 9a) has arranged in it a two-position switching valve (10, 10') which is capable of being changed over, counter to spring force (11, 11a), out of a shut-off position into a passage position via a pilot-control tapping line (12, 12a) towards that part of the delivery line (1) which is located downstream of the non-return valve (R).

2. Hydraulic control device according to Claim 1, **characterized in that** the first hydraulically pilot-controlled magnetically actuable seat valve (V1) is arranged, upstream of the non-return valve (R), between the delivery line (1) and the return line (2) and is designed as a black/white or proportional seat valve (V1), and **in that** the second hydraulically pilot-controlled magnetically actuable seat valve (V2) is arranged, downstream of the non-return valve (R), between the delivery line (1) and the return line (2) and is designed as a proportional seat valve or as a proportional-seat-valve two-way flow controller (Z).

3. Hydraulic control device according to Claim 1, **characterized in that** the two-position switching valve (10, 10'), on its pilot-control side, is designed sealingly so as to be free of leakage in the outflow direction from the tipper drive (K, K1).

4. Hydraulic control device according to Claim 1, **characterized in that** the response pressure of the two-position switching valve (10, 10') is adjustable.

5. Hydraulic control device according to Claim 2, **characterized in that** the second seat valve (V2), designed as a proportional-seat-valve two-way flow controller (Z), has a pressure balance (W) capable of being brought into a delimiting position and having a seat-valve function in the shut-off position.

6. Hydraulic control device according to at least one of the preceding claims, **characterized in that** a direct system-pressure limiting valve (D) is provided between the delivery line (1) and the return line (2).

7. Hydraulic control device according to at least one of Claims 1 to 5, **characterized in that** between the two-position switching valve (10, 10') and the hydraulic pilot control (7) of the first seat valve (V1) and the return line (2) is provided a control-line branch (13) in which is provided a pressure-limiting valve (D') which is pilot-controlled hydraulically from the side of the hydraulic pilot control (7) and which monitors the pressure in the delivery line (1) indirectly via the pilot control of the first seat valve (V1).

8. Hydraulic control device according to at least one of Claims 1 to 7, **characterized in that** the delivery line (1) is divided via a hydraulic switch point (T) into a line branch (1a) for the tipper drive (K) of a tipper vehicle and at least one line branch (1b) for a tipper drive (K1) of a tipper trailer, and **in that** a two-position switching valve (10, 10') is provided, one parallel to the other, for each line branch (1a, 1b) in the control line (9, 9a) and is connected via its own pilot-control tapping line (12, 12') to the associated line branch (1a, 1b).

## Revendications

1. Dispositif de commande hydraulique (S) en particulier pour le réglage d'au moins un entraînement de benne basculante (K, K1) dans un véhicule à benne basculante, comportant une première électrovanne de distribution de levage et une seconde électrovanne de distribution d'abaissement, qui sont affectées à une conduite de pression (1) raccordée à une pompe (P) menant vers l'entraînement de benne basculante (K, K1) et à une conduite de retour (2), comportant dans la conduite de pression (1) un clapet anti-retour (R) bloquant vers la pompe (P), et comportant un dispositif de commutation de refoulement de pompe répondant automatiquement en fonction de la pression, l'entraînement de benne basculante (K, K1) pouvant au choix être bloqué étanche sans fuite ou être relié avec la pompe (P) ou la conduite de retour (1), **caractérisé en ce que** la première et la seconde vannes de commande de distribution sont chacune une vanne à siège (V1, V2) pilotée hydrauliquement et disposée entre la conduite de pression (1) et la conduite de retour (2), **en ce que** le pilotage hydraulique (7) de la première vanne à siège (V1) est relié à la conduite de retour (2) par l'intermédiaire d'une conduite de commande (9, 9a), et **en ce que** dans la conduite de commande (9, 9a) est disposée une vanne de commutation (10, 10') à deux positions pouvant être commutée d'une position d'arrêt dans une position de passage contre la force élastique (11, 11a), par l'intermédiaire d'une conduite de piquage (12, 12a) de pilotage vers la pièce de la conduite de pression (1) située en aval du clapet anti-retour (R).

2. Dispositif de commande hydraulique selon la revendication 1, **caractérisé en ce que** la première électrovanne à siège (V1) pilotée hydrauliquement est disposée entre la conduite de pression (1) et la conduite de retour (2) en amont du clapet anti-retour (R) et est conçue en tant que vanne à siège (V1) tout ou rien ou proportionnelle, et **en ce que** la seconde électrovanne à siège (V2) pilotée hydrauliquement est disposée entre la conduite de pression (1) et la conduite de retour (2) en aval du clapet anti-retour (R) et est conçue en tant que vanne à siège proportionnelle ou en tant que régulateur de débit à deux voies (Z) de vanne à siège proportionnelle.

3. Dispositif de commande hydraulique selon la revendication 1, **caractérisé en ce que**, sur son côté de pilotage dans le sens aval à partir de l'entraînement de benne basculante (K, K1), la vanne de commutation à deux positions (10, 10') est conçue étanche sans fuite.

4. Dispositif de commande hydraulique selon la revendication 1, **caractérisé en ce que** la pression de réponse de la vanne de commutation à deux positions (10, 10') est réglable.

5. Dispositif de commande hydraulique selon la revendication 2, **caractérisé en ce que** la seconde vanne à siège (V2) conçue en tant que régulateur de débit à deux voies (Z) de vanne à siège proportionnelle, présente une balance de pression (W) pouvant être amenée en position de limitation fonctionnant en tant que vanne à siège dans la position d'arrêt.

6. Dispositif de commande hydraulique selon au moins l'une des revendications précédentes, **caractérisé en ce qu'**une vanne (D) de limitation de la pression système est prévue entre la conduite de pression (1) et la conduite de retour (2).

7. Dispositif de commande hydraulique selon au moins l'une des revendications 1 à 5, **caractérisé en ce que**, entre la vanne de commutation à deux positions (10, 10') et la commande de pilotage hydraulique (7) de la première vanne à siège (V1) et la conduite de retour (2), est prévue une branche de conduite de commande (13) dans laquelle est prévue une vanne de limitation de pression (D') pilotée hydrauliquement depuis le côté de la commande de pilotage hydraulique (7), qui surveille la pression dans la conduite de pression (1) indirectement par l'intermédiaire de la commande de pilotage de la première vanna è siège (V1).

8. Dispositif de commande hydraulique selon au moins l'une des revendications 1 à 7, **caractérisé en ce que** la conduite de pression (1) est divisée par une aiguille hydraulique (T) en une branche de conduite (1a) pour l'entraînement de benne basculante (K) d'un véhicule à benne basculante et au moins une branche de conduite (1b) pour un entraînement de benne basculante (K1) d'une remorque de benne basculante, et **en ce que** dans la conduite de commande (9, 9a), une vanne de commutation à deux positions (10, 10'), est prévue, parallèlement l'une à l'antre pour chaque branche de conduite (1a, 1b), et raccordée à la branche de conduite (1a, 1b) correspondante par l'intermédiaire d'une conduite de piquage propre (12, 12') de pilotage respective.
